# EUROPEAN PATENT SPECIFICATION

(11) **EP 4 225 107 B1**
(45) Date of publication and mention of the grant of the patent: **03.12.2025**
(21) Application number: 21790122.2
(22) Date of filing: 06.10.2021
(51) Int. Cl.: A47F 1/06, B65G 1/07, B65D 83/08

(54) **A SPRUNG DISPLAY CASE FOR DISPENSING PRODUCTS**
GEFEDERTER SCHAUKASTEN ZUR AUSGABE VON PRODUKTEN
PRÉSENTOIR À RESSORT POUR LA DISTRIBUTION DE PRODUITS

(30) Priority: 09.10.2020 GB 202016074
(43) Date of publication of application: 16.08.2023
(73) Proprietor: ATL Associates Limited, Wigston, Leicestershire LE18 4YH (GB)
(72) Inventor: COOPER, James Anthony, Wigston, Leicestershire LE18 4YH (GB); JONES-FENLEIGH, Benjamin James, Wigston, Leicestershire LE18 4YH (GB)
(74) Representative: Serjeants LLP
(86) International application number: PCT/EP2021/077542
(87) International publication number: WO 2022/074050

(56) References cited:
- FR-A1- 2 893 166
- US-A- 2 397 403

## Description

### Field of Invention

The present invention relates to the display of products in retail stores. The present invention provides an improved case for the display of products at an easy to reach height, in an enticing position. This can increase impulse purchases and make products more visible to consumers.

### Background

Sprung display cases for various products have been available for a number of years. Perhaps the most common sprung display case are newspaper bins wherein a stack of newspapers are displayed in a vertical bin on a horizontal sprung platform. The bin is sized and shaped to conform to the size of the newspapers stacked therein. The sprung platform is formed such that the uppermost newspaper of the stack is always held at or about the top of the display case. That is, when a newspaper is removed from the bin the reduction in weight on the platform allows the platform to move a distance towards the top of the bin that is substantially equal to the thickness of the newspaper that has been removed. This is achieved by mounting one or more resilient compressible members, for example a spring, within the bin between a lower surface of the platform and an upper surface of the base of the bin. The resilient compressible member will be of a suitable strength to achieve the required displacement of the platform when a newspaper is removed. In this manner newspapers can be displayed in a simple manner that avoids the need for consumers to bend down and pick a newspaper from the bottom of a bin.

In light of the success of newspaper bins there has been a drive to provide display cases for a more varied range of products. Sprung display cases for various products have been produced with varying degrees of success. Generally sprung display cases have been considered suitable for products that are sold in relatively high volume in standard shaped packages, such as cuboid packages. It has been found that sprung display cases can improve sales of a product, increasing impulse purchases and making products more accessible to consumers.

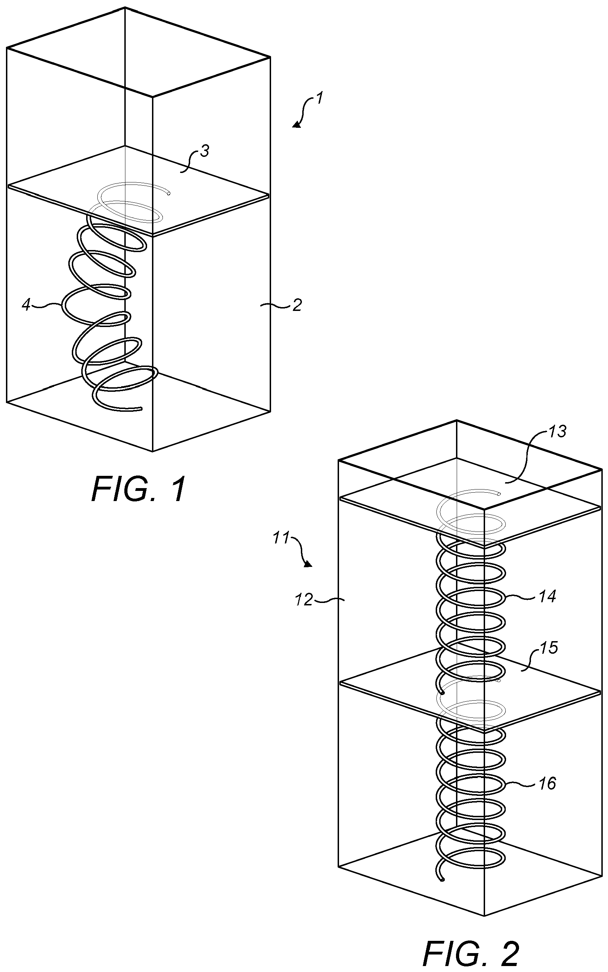

Figure 1 shows a first prior art embodiment of a sprung display case. The case 1 comprises a vertical chamber 2 open at an upper end, a horizontal platform 3 slidably mounted within the chamber 2, and a coil spring 4 mounted within the chamber 2 beneath the platform 3. In embodiments formed in this manner using conventional coil springs 4 it was found that if the case 1 is filled more than half full the spring 4 would snake in the manner shown in the Figure. This resulted in the case jamming ceasing to function.

In order to overcome the problems with the embodiment of Figure 1, the cases were modified to include two springs and central plunger mounted between the two springs. This embodiment is shown in Figure 2. In effect the single vertical spring is split in two by means of a central platform or plunger. The case 11 of Figure 2 comprises a vertical chamber 12 open at an upper end, a horizontal platform 13 slidably mounted within the chamber 12, an upper coil spring 14 mounted within the chamber 12 directly beneath the platform 13, a central plunger 15 slidably mounted within the chamber 12 at a lower end of the upper coil spring 14, and a lower coil spring 16 mounted beneath the central plunger 15. The lower coil spring 16 is relatively more resilient than the upper coil spring 14. Both the horizontal platform 13 and the central plunger 15 were bespoke injection moulded components.

When the case 11 is loaded to approximately halfway, due to the relative strength of the upper and lower coil springs 14, 16 substantially all of the compression occurs in the upper coil spring 14 and there is little or no compression of the lower coil spring 16. When loaded further, the lower coil spring 16 would become compressed until the bin was full. The provision of two springs and a central plunger overcame the snaking issues present in the embodiment not according to the invention of Figure 2 and this embodiment operates satisfactorily.

However, in the embodiment not according to the invention of Figure 2 the requirement for two separate springs significantly reduces the capacity of the case 11 compared to the theoretical capacity of the case 1 of Figure 1. Further the provision of two bespoke injection moulded components (the central plunger 15 and the plunger 13) makes the embodiment of Figure 2 prohibitively expensive to manufacture.

GB2569192A or US2598156A discloses an improved sprung display case for dispensing products. The display case of GB2569192 is particularly suitable for dispensing heavy products, such as beverage multipacks. There have now been further attempts to create sprung display cases for a variety of other products that are typically stocked on shelves. This has been done to increase sales of the products.

### Summary of Invention

The present invention provides a sprung display case according to claim 1

This is advantageous in that it acts to provide the upper most product on a vertical in a position that is easy to grasp. This improves the usability of a sprung display case and can increase impulse purchases.

Generally, the vertical chamber will be formed to have a horizontal cross-section that conforms with the products intended to be dispensed from the sprung display case. In embodiments of the invention it may be advantageous that the chamber is substantially cuboid to allow products in cuboid packaging to be easily dispensed. For example, embodiments of the invention may be sized and shaped to dispense perfume boxes or other products contained in substantially cuboid boxes.

The platform of the present invention may be formed in any appropriate manner. In embodiments of the invention the platform may be formed of a suitable sheet material, such as sheet metal.

As will be readily appreciated, the sprung display case of the present invention should not act to push products completely out of the display case without user interaction. Doing so would render the sprung display case incapable of containing products, rather they would be automatically dispensed in turn.

In sprung display cases in which the upwards biasing means is a resiliently compressible helical spring there can be a risk of the helical spring snaking as it is compressed within the vertical chamber. In order to prevent snaking spring guiding means are provided. According to the present invention a spring guiding means comprise a first upwardly extending member mounted centrally within the spring at the upper surface of the base of the chamber and a first downwardly extending member mounted centrally within the spring at the lower side of the platform. The first upwardly extending members and first downwardly extending members will generally comprise vertically extending members that sit centrally within the helical spring and thereby prevent lateral movement, or snaking, of the spring as the helical spring is compressed. This can prevent jamming of the platform as it moves vertically within the vertical chamber.

In order to further prevent snaking of the sprung display case, it further comprises a second platform mounted on the spring between the platform and the upper side of the base of the chamber. The second platform is positioned between the base of the vertical chamber and the horizontal platform that is positioned at an upper end of the helical spring and can prevent snaking of the helical spring as it is compressed by preventing lateral movement of the spring towards sides of the vertical chamber. Advantageously, a second platform can be mounted on the spring approximately halfway between the platform and the upper side of the base of the chamber or at any other suitable location on the helical spring.

The sprung display case further comprises a second upwardly extending member mounted centrally with the spring at an upper surface of the second platform and/or a second downwardly extending member mounted centrally within the spring at a lower surface of the second platform. Such members can further act to prevent snaking of the helical spring as it is compressed.

Any upwardly or downwardly extending members provided to prevent snaking of a helical spring can be formed in any manner apparent to the person skilled in the art. In simple embodiments the upwardly or downwardly extending members may be formed of sheet metal and may, for example be rounded sheet metal members that do not have sharp corners and will not snag the spring as it is compressed. A vertical length of any upwardly or downwardly extending member may be determined as appropriate for the specific embodiment of the invention. For example, the or each upwardly or downwardly extending member may have a vertical length that is between 5% and 20% of the height of the vertical chamber.

Further features and advantages of the present invention will be apparent from the embodiment shown in the drawings and described below.

### Drawings

Figure 1 is a schematic diagram of a first embodiment of a display case according to the prior art;
Figure 2 is a schematic diagram of a second embodiment of a display case according to the prior art; and
Figure 3 is a schematic diagram of a display case embodiment not according to the present invention;
Figure 4 is a schematic diagram of a display case according to the present invention.

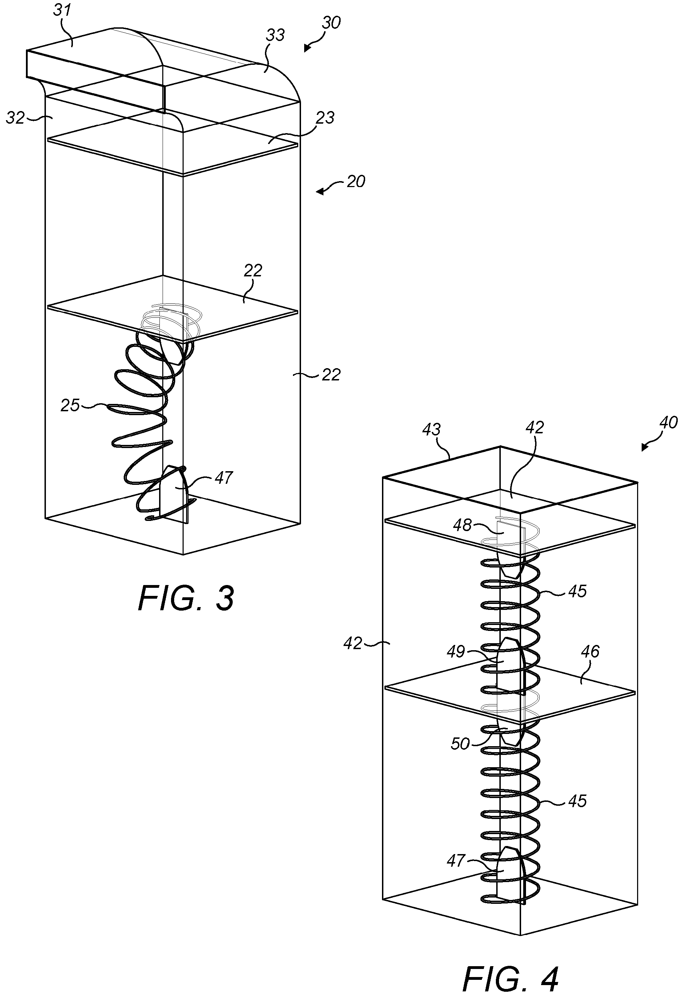

A sprung display case 21 not according to the present invention is shown in Figure 3. The case 21 comprises a vertical chamber 22 open at an upper end 23, a horizontal platform 24 slidably mounted within the chamber 22, a coil spring 25 mounted within the chamber 22 beneath the platform 24, and a tether 26 attached at a first end to a lower side of the platform 24 and at a second end to a base of the chamber 22. The tether 26 is located centrally within the coil spring 25. An impingement surface 30 is formed above the upper end 23 of the vertical chamber 22. Side walls 31 are formed between outer horizontal edges of the impingement surface 30 and upper edges of the vertical chamber 22 to enclose the upper end 23 of the vertical chamber. The case 21 is designed to display perfume boxes.

The platform 24 is formed of sheet metal. The spring 25 is formed of steel wire. The tether 26 is a cable. The case 21 has a height such that the upper end of the vertical chamber 22 is at approximately 1.2m from the base, this being a convenient height for a person to obtain goods from. When the case 21 is empty the tether 26 acts to hold the spring 25 in a compressed state and the platform 24 substantially at the upper end of the chamber 22. In particular, the tether 26 prevents the platform 24 from extending out of the upper end of the chamber 22.

The impingement surface 30 has a lower portion 32 that is substantially vertical and does not impinge over the upper end 23 of the vertical chamber. The height of the lower portion is just more than the height of a perfume package (not shown) that the display case 21 is intended to contain. The impingement surface 30 also has an upper portion 33 that is curved towards an opposing side of the display case 21.

The display case 21 is operated in the following manner. A plurality of identical perfume boxes are stacked in the vertical chamber 22. When doing this the platform 24 will move vertically down the chamber 22 and the spring 25 will be compressed. The strength of the spring is such that the uppermost of the perfume boxes will be positioned above the upper end of the vertical chamber 22, in contact with the impingement surface 30. The upwards vertical force from the spring 25 is redirected by the impingement surface 30 into a horizontal surface that acts to move the perfume box horizontally outwards from the display case 21, until the perfume box extends partially horizontally outwards from the display case 21 but remains supported on the display case 21. The strength of the spring 25 and the angle of the impingement surface 30 are controlled such that the perfume box is not pushed completely out of the display case 21. As the uppermost perfume box protrudes partially out of the display case 21 they are easier for a customer to remove from the display case 21.

When a customer wishes to purchase perfume they will remove the partially protruding perfume box from the display case 21. When the uppermost perfume box is removed the weight acting on the platform 24 and the spring 25 will be reduced and the spring will then act to move the platform 24 upwards until the perfume box immediately below the uppermost perfume box is moved to the position the uppermost perfume box was removed from. In particular, the perfume box is moved vertically upwards under the action until it contacts the impingement surface 30, at which point the vertical upwards force from the spring is redirected by the impingement surface such that the perfume box moves both vertically upwards and horizontally outwards.

As will be readily understood, whilst the embodiment not according to the invention shown in Figure 3 utilises a spring 25 as a resilient member, this may be replaced by any appropriate biasing means that acts to push the platform 24 upwards. Alternative biasing means include powered means, such as actuators, and compressive means such as springs.

Figure 4 shows a sprung display case 40 according to the present invention.

The case 40 comprises a vertical chamber 42 open at an upper end 43, a horizontal platform 44 slidably mounted within the chamber 42, a helical spring 45 mounted within the chamber 22 beneath the platform 44.

The platform 44 is formed of sheet metal. The spring 45 is helical spring formed of steel wire. The case 40 has a height such that the upper end of the vertical chamber 42 is at approximately 1.2m from the base, this being a convenient height for a person to obtain goods from. When the case 40 is empty the platform 44 substantially at the upper end of the chamber 42. This is controlled by suitably forming the helical spring 45 to have a suitable length.

A second platform 46 is mounted halfway along the vertical height of the helical spring 45 between the platform 44 and the base of the vertical chamber 42.

## Claims

1. A sprung display case for dispensing products, the sprung display case (40) comprising: a vertical chamber (42) open at an upper end (43) and sized and shaped such that a plurality of the products can be vertically stacked within the chamber (42); a horizontal platform (44) mounted to be vertically slidable within the chamber (42); a resiliently compressible helical spring (45) mounted in the chamber (42) between a lower side of the platform (46) and an upper side of a base of the chamber (42) to bias the platform (44) towards the upper end (43) of the chamber (42); a second platform (46) mounted on the spring (45) between the platform (44) and the upper side of the base of the chamber (42); a second upwardly extending member (49) mounted centrally within the spring (45) at an upper surface of the second platform (46) and/or a second downwardly extending member (50) mounted centrally with the spring (45) at a lower surface of the second platform (46); and spring guiding means for preventing snaking of the spring (45); the spring guiding means comprising: a first upwardly extending member (47) mounted centrally within the spring (45) at the upper surface of the base of the chamber (42); and a first downwardly extending member (48) mounted centrally within the spring (45) at the lower side of the platform (44).

2. A sprung display case according to claim 1, wherein the second platform is mounted on the spring halfway between the platform and the upper side of the base of the chamber.

## Patentansprüche

1. Gefederter Schaukasten zur Ausgabe von Produkten, wobei der gefederte Schaukasten (40) umfasst: eine vertikale Kammer (42), die an einem oberen Ende (43) offen und so bemessen und geformt ist, dass eine Vielzahl der Produkte in der Kammer (42) vertikal gestapelt werden kann; eine horizontale Plattform (44), die innerhalb der Kammer (42) vertikal verschiebbar angebracht ist; eine elastisch zusammendrückbare Schraubenfeder (45), die in der Kammer (42) zwischen einer Unterseite der Plattform (46) und einer Oberseite eines Bodens der Kammer (42) angebracht ist, um die Plattform (44) in Richtung des oberen Endes (43) der Kammer (42) vorzuspannen; eine zweite Plattform (46), die auf der Feder (45) zwischen der Plattform (44) und der Oberseite des Bodens der Kammer (42) angebracht ist; ein zweites sich nach oben erstreckendes Element (49), das zentral innerhalb der Feder (45) an einer Oberseite der zweiten Plattform (46) angebracht ist, und/oder ein zweites sich nach unten erstreckendes Element (50), das zentral mit der Feder (45) an einer Unterseite der zweiten Plattform (46) angebracht ist; und eine Federführung zur Verhinderung des Knickens der Feder (45); wobei die Federführung Folgendes umfasst: ein erstes sich nach oben erstreckendes Element (47), das zentral innerhalb der Feder (45) an der Oberseite des Bodens der Kammer (42) angebracht ist; und ein erstes sich nach unten erstreckendes Element (48), das zentral innerhalb der Feder (45) an der Unterseite der Plattform (44) angebracht ist.

2. Gefederter Schaukasten nach Anspruch 1, wobei die zweite Plattform auf der Feder auf halbem Weg zwischen der Plattform und der Oberseite des Bodens der Kammer angebracht ist.

## Revendications

1. Présentoir à ressort pour la distribution de produits, le présentoir à ressort (40) comprenant : une chambre (42) verticale ouverte au niveau d'une extrémité supérieure (43) et dimensionnée et formée de telle sorte qu'une pluralité de produits puissent être empilés verticalement à l'intérieur de la chambre (42) ; une plate-forme (44) horizontale montée de manière à pouvoir coulisser verticalement à l'intérieur de la chambre (42) ; un ressort (45) hélicoïdal compressible de façon résiliente monté dans la chambre (42) entre un côté inférieur de la plate-forme (46) et un côté supérieur d'une base de la chambre (42) pour solliciter la plate-forme (44) vers l'extrémité supérieure (43) de la chambre (42) ; une deuxième plate-forme (46) montée sur le ressort (45) entre la plate-forme (44) et le côté supérieur de la base de la chambre (42) ; un deuxième élément s'étendant vers le haut (49) monté au centre du ressort (45) au niveau d'une surface supérieure de la deuxième plate-forme (46) et/ou un deuxième élément s'étendant vers le bas (50) monté au centre du ressort (45) au niveau d'une surface inférieure de la deuxième plate-forme (46) ; et un moyen de guidage du ressort pour empêcher le ressort (45) de se tordre ; le moyen de guidage du ressort comprenant : un premier élément s'étendant vers le haut (47) monté au centre du ressort (45) au niveau de la surface supérieure de la base de la chambre (42) ; et un premier élément s'étendant vers le bas (48) monté au centre du ressort (45) au niveau de la surface inférieure de la plate-forme (44).

2. Présentoir à ressort selon la revendication 1, dans lequel la deuxième plate-forme est montée sur le ressort à mi-chemin entre la plate-forme et le côté supérieur de la base de la chambre.
